# EUROPÄISCHE PATENTSCHRIFT

(11) **EP 3 835 258 B1**
(45) Veröffentlichungstag und Bekanntmachung des Hinweises auf die Patenterteilung: **09.08.2023**
(21) Anmeldenummer: 19020688.8
(22) Anmeldetag: 11.12.2019
(51) Int. Cl.: C01B 3/34, B01D 53/047, B01D 53/26, C01B 3/36, C01B 3/50, C01B 3/56, C10K 3/04, C01B 3/38, C01B 3/48, C01B 3/52

(54) **VERFAHREN UND ANLAGE ZUM HERSTELLEN EINES SYNTHESEGASPRODUKTSTROMS MIT EINSTELLBAREM H2/CO-VERHÄLTNIS UND EINES REINWASSERSTOFFSTROMS**
METHOD AND SYSTEM FOR PRODUCING A SYNTHESIS GAS PRODUCT FLOW WITH ADJUSTABLE H2/ CO RATIO AND A PURE HYDROGEN STREAM
PROCÉDÉ ET INSTALLATION DE PRODUCTION D'UN COURANT DE PRODUITS GAZEUX DE SYNTHÈSE À UN RAPPORT H2/CO RÉGLABLE ET D'UN COURANT D'HYDROGÈNE PUR

(43) Veröffentlichungstag der Anmeldung: 16.06.2021
(73) Patentinhaber: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Ott, Jörg, 60389 Frankfurt a. M. (DE)
(74) Vertreter: Dropsch, Holger

(56) Entgegenhaltungen:
- US-A- 5 888 470
- US-A1- 2006 194 889
- US-A1- 2011 271 714
- AHMADREZA RAHBARI ET AL: "Combined Steam Reforming of Methane and Formic Acid To Produce Syngas with an Adjustable H 2 :CO Ratio", INDUSTRIAL & ENGINEERING CHEMISTRY RESEARCH, Bd. 57, Nr. 31, 17. Juli 2018 (2018-07-17) , Seiten 10663-10674, XP055697013, ISSN: 0888-5885, DOI: 10.1021/acs.iecr.8b02443

## Beschreibung

### Gebiet der Erfindung

Die Erfindung betrifft ein Verfahren und eine Anlage zum Herstellen eines Synthesegasproduktstroms mit einstellbarem Wasserstoff-Kohlenmonoxid-Verhältnis und eines Reinwasserstoffstroms aus einem Kohlenwasserstoffe enthaltenden Einsatzstrom mittels eines Reformierungsverfahren (Dampfreformierung, autotherme Reformierung) oder eines Partialoxidationsverfahrens oder Mischungen dieser Verfahren.

Die Erfindung betrifft ferner die Verwendung eines solchen Verfahrens bzw. einer solchen Anlage zum Herstellen eines als Oxogas geeigneten Synthesegasproduktstroms

### Stand der Technik

Als Synthesegase bezeichnet man Wasserstoff und Kohlenoxide enthaltende Gasgemische, die in verschiedenen Synthesereaktionen Verwendung finden. Beispiele hierfür sind die Methanolsynthese, die Oxosynthese oder die Fischer-Tropsch-Synthese.

Bei der Oxosynthese, die auch als Hydroformylierung bezeichnet wird, handelt es sich gemäß der Internet-Enzyklopädie "Wikipedia", Schlagwort Hydroformylierung, abgerufen am 13.11.2019, um eine technisch bedeutende, homogen katalysierte Reaktion von Olefinen mit Kohlenmonoxid und Wasserstoff, die gemäß der folgenden, allgemeinen Reaktionsgleichung verläuft, aus der ersichtlich ist, dass aus stöchiometrischer Sicht für die Oxosynthese ein Synthesegas mit äquimolarem Kohlenmonoxid- und Wasserstoffgehalt benötigt wird.

CₙH₂ₙ + CO + H₂ = CₙH₂ₙ₊₁CHO

In der Praxis ist ein molares Verhältnis von Wasserstoff zu Kohlenstoffmonoxid von 1,5 mol/mol erwünscht. Der überschüssige Wasserstoff wird in der parallel ablaufenden Hydrierung der Aldehyde zu Alkoholen verbraucht.

Die primären Produkte der Hydroformylierung sind Aldehyde mit einem Kohlenstoffatom mehr als das Ausgangsolefin. Diese Aldehyde werden zur Herstellung einer Vielzahl von Folgeprodukte verwendet und dabei oft zunächst zu den korrespondierenden Alkoholen hydriert. Wichtige industrielle Produkte der Hydroformylierung sind 1-Butanol und 2-Ethylhexanol, die beide aus Propen gewonnen werden. Als Hydroformylierungs-Katalysatoren werden in der großtechnischen Anwendung metallorganische Cobalt- oder Rhodiumverbindungen verwendet. Das industrielle Verfahren wird bei Drücken von etwa 10 bar bis 100 bar und Temperaturen zwischen 40 und 200 °C durchgeführt. Die Gesamtkapazität der existierenden Hydroformylierungsanlagen beträgt mehrere Millionen Tonnen pro Jahr.

Zur Herstellung des benötigten Synthesegases kommen prinzipiell alle bekannten und in der industriellen Erzeugung angewandten Syntheseverfahren in Betracht, also insbesondere die Dampfreformierung von Kohlenwasserstoffen, insbesondere von Erdgas (Steam Methane Reforming, SMR) oder beispielsweise auch von Naphtha oder Raffineriereststoffen, die nichtkatalytische Partialoxidation von Kohlenwasserstoffen (POX) oder die autotherme Reformierung als Mischform beider vorgenannter Verfahren zum Einsatz. Technische Einzelheiten dieser Verfahren sind der Fachwelt bekannt und werden beispielsweise in Ullmann's Encyclopedia of Industrial Chemistry, Sixth Edition, 1998 Electronic Release, Stichwort "Gas Production", im Detail erläutert.

Neben der Unterschiede im Verfahrensablauf sind ferner auch Unterschiede in der Zusammensetzung der erzeugten Synthesegasprodukte, insbesondere in dem erhaltenen Wasserstoff-Kohlenmonoxid-(H₂/CO-)Verhältnis zu verzeichnen. Ausgehend von Methan als einfachstem einzusetzendem Kohlenwasserstoff lauten die Bruttoreaktionsgleichungen dieser Verfahren wie folgt:

| | | |
|---|---|---|
| 2 CH₄ + O₂ | = 2 CO + 4 H₂ | (Partialoxidation) |
| 2 CH₄ + ½ O₂ + H₂O | = 2 CO + 5 H₂ | (autotherme Reformierung) |
| 2 CH₄ + 2 H₂O | = 2 CO + 6 H₂ | (reine Dampfreformierung) |

Somit wird von keinem der Verfahren für sich betrachtet ein Synthesegasprodukt mit dem gewünschten, stöchiometrischen H₂/CO-Verhältnis bzw. mit nur leichtem Wasserstoff-Überschuss erhalten. Um ein für die Oxosynthese einsetzbares Synthesegasprodukt zu erhalten, ist es daher erforderlich, einen Teil des Wasserstoffs abzutrennen, insbesondere dann, wenn bei der Aufbereitung oder Weiterverarbeitung des aus den oben genannten Verfahren erhaltenen Rohsynthesegases der Wasserstoffgehalt weiter erhöht wird. Ein Beispiel für eine solche Weiterverarbeitung ist die CO-Konvertierungsreaktion, auch als Wassergas-Shift-Reaktion (WGS) oder CO-Shift-Reaktion bezeichnet, gemäß der Umsatzgleichung

CO + H₂O = CO₂ + H₂

Unter Zugabe von Wasserdampf reagiert demnach das CO zu CO₂ und H₂. Aufgrund der Reaktionsenthalpie von -41,2 kJ/mol verschiebt sich das chemische Gleichgewicht mit steigender Temperatur von den Reaktionsprodukten hin zu den Reaktionsedukten. Je nach angewandter Reaktionstemperatur wird dabei von Hochtemperatur (HTS)-, Mitteltemperatur (MTS)- oder Tieftemperatur (LTS)-Shift gesprochen. Je nach Art der verwendeten Katalysatoren ist es ferner möglich, die Shift-Reaktion auch mit dem ungereinigten Rohsynthesegas durchzuführen. Dieses Verfahren wird als Rohgas-Shift oder auch - wegen der aciden Gasbestandteile, namentlich CO₂ und H₂S - als Sauergas-Shift bezeichnet.

Die weitere Aufbereitung des erzeugten Rohsynthesegases umfasst zumeist auch ein Verfahren zur Abtrennung weiterer unerwünschter Begleitstoffe, beispielsweise mittels physikalischer oder chemischer Absorption oder Gaswäsche. So können mit solchen Verfahren unerwünschte, acide Bestandteile aus durch Vergasung oder Reformierung von kohlenstoffhaltigen Einsatzstoffen erzeugten Rohsynthesegasen, beispielsweise Kohlendioxid (CO₂) und Schwefelwasserstoff (H₂S), aber auch weitere Bestandteile wie Carbonylsulfid (COS), Cyanwasserstoff (HCN) oder Mercaptane (RSH), von den erwünschten Synthesegasbestandteilen Wasserstoff und Kohlenmonoxid sicher bis in den Spurenbereich entfernt werden. Ein bekanntes und häufig angewendetes Verfahren ist das Rectisol-Verfahren, das eine Wäsche des Rohsynthesegases mit tiefkaltem Methanol als Absorbens umfasst und ebenfalls im oben genannten Schrifttum grundsätzlich beschrieben wird.

Zur Entfernung von Spuren höherer Kohlenwasserstoffe oder von Kohlenmonoxid kann die kryogene Gaszerlegung (sog. Coldbox) eingesetzt werden. Bei dieser wird hauptsächlich flüssiges Methan oder flüssiger Stickstoff verwendet, um höher siedende Gase wie Kohlenmonoxid zu absorbieren.

Zur Herstellung von Reinwasserstoff folgt als abschließender Schritt üblicherweise die Behandlung des Rohwasserstoffstroms in einer Anlage zur Druckwechseladsorption (pressure swing adsorption, PSA), deren grundsätzliche Eigenschaften in dem Buch "Gasification", C. Higman und M. van der Burgt, Kapitel 8.2.3 "Adsorption systems", Gulf Professional Publishing (2003), dargestellt werden. Ihr optimaler Betriebsdruck liegt zwischen 15 und 30 bar, wobei dann Wasserstoffausbeuten zwischen 80 und 92 % erreicht werden können. Bei höheren Betriebsdrücken geht die Wasserstoffausbeute zurück. Die Temperatur des PSA-Feedgases liegt üblicherweise unter 40 °C, wobei entstehendes Kondensat zuvor abgetrennt wird.

Die Druckwechseladsorption verwendet Molekularsiebe als Adsorbentien in einer Reihe von Behältern, die in einem gestaffelten zyklischen Modus betrieben werden, der zwischen einer Adsorptionsphase und verschiedenen Phasen der Regeneration wechselt. Die Regeneration des beladenen Adsorbens erfolgt durch schrittweise Druckentlastung und durch die Verwendung des Gases aus diesem Vorgang, um andere Adsorber im Regenerationszyklus mit einem anderen Druckniveau zu spülen. Die Wasserstoffrückgewinnung kann je nach Anzahl der Adsorber in einer Linie bis zu 90 % und bis zu 10 % betragen. Es kann eine sehr hohe Reinheit erreicht werden, mit etwa 50 ppm Argon und weniger als 10 ppm anderer Verunreinigungen.

Die Herstellung eines für die Oxosynthese einsetzbaren Synthesegasprodukts neben einem Reinwasserstoffprodukt wird beispielsweise in der US-Patentanmeldung US 2008/0272340 A1 beschrieben. Die dort offenbarte Erfindung betrifft ein Verfahren zur Herstellung von Synthesegas aus Kohlenwasserstoffen. Nach einer Ausführungsform der Erfindung umfasst die Synthesegasproduktionseinheit eine Vorrichtung zum Einstellen des H₂/CO-Molverhältnisses des Synthesegases, beispielsweise zur Herstellung von Oxogas. Diese Vorrichtung umfasst eine wasserstoffdurchlässige Membran, wobei die Wasserstoffselektivität der Membran die Einstellung des gewünschten H₂/CO-Molverhältnisses ermöglichen soll. Ferner wird bei der Membrantrennung des Rohsynthesegases auch ein Wasserstoffpermeat erhalten, der als Brennstoff genutzt wird, beispielsweise in einem Blockheizkraftwerk. Nachteilig ist hierbei die nur mit großem Aufwand mögliche Einstellung, insbesondere eine Feineinstellung des H₂/CO-Molverhältnisses durch Austausch der Trennmembran und Ersatz gegen eine andere Membran, die aufgrund ihrer geänderten Wasserstoffselektivität die Einstellung des gewünschten H₂/CO-Molverhältnisses ermöglicht. Der als Nebenprodukt erhaltene, gegenüber dem Rohsynthesegas an Wasserstoff angereicherte Permeatstrom wird lediglich thermisch als Brennstoff genutzt. Die Herstellung eines Synthesegasproduktes einstellbarer Zusammensetzung und eines Reinwasserstoffproduktes wird dagegen nicht offenbart.

US 2006/194889 offenbart ein Verfahren und eine Anlage zur Herstellung von Synthesegas mit einstellbarem H2/CO-Verhältnis und Wasserstoff. Rohsynthesegas wird in einem wasserstoffselektiven Membran in einem wasserstoffangereicherten Strom und einem wasserstoffabgereicherten Strom aufgeteilt. Der wasserstoffabgereicherte Strom wird als Synthesegas für eine nachfolgende Reaktion verwendet. Der wasserstoffangereicherte Strom wird in einer Druckwechseladsorptionsanlage behandelt, wobei hochreiner Wasserstoff und ein Reststrom entstehen.

### Beschreibung der Erfindung

Die Aufgabe der vorliegenden Erfindung besteht daher darin, ein Verfahren und eine Anlage zum Herstellen eines Synthesegasproduktstroms mit einstellbarem H₂/CO-Verhältnis und eines Reinwasserstoffstroms anzugeben, die die erwähnten Nachteile des Stands der Technik nicht aufweisen.

Diese Aufgabe wird in einem ersten Aspekt durch ein Verfahren mit den Merkmalen des Anspruchs 1 und mit einer Anlage mit den Merkmalen des Anspruchs 12 gelöst. Weitere Ausgestaltungen der Erfindung ergeben sich aus den Unteransprüchen der jeweiligen Kategorie. Die Erfindung betrifft auch die Verwendung des Verfahrens oder der Anlage gemäß der Erfindung zum Herstellen eines als Oxogas geeigneten Synthesegasproduktstroms.

Die Synthesegaserzeugungsbedingungen, also die für die Durchführung der Dampfreformierung, des autothermen Reformierens (ATR) oder der partiellen, nichtkatalytischen Oxidation anzuwendenden Reaktions- und Verfahrensbedingungen dem Fachmann aus dem Stand der Technik, beispielsweise den eingangs erörterten Dokumenten, bekannt. Es sind diejenigen physikalisch-chemischen Bedingungen, unter denen ein messbarer, bevorzugt ein technisch relevanter Umsatz von Kohlenwasserstoffen zu Synthesegasprodukten erzielt wird. Notwendige Anpassungen dieser Bedingungen an die jeweiligen Betriebserfordernisse wird er auf der Grundlage von Routineversuchen vor-nehmen. Dabei können ggf. offenbarte, spezifische Reaktionsbedingungen als Orientierung dienen, sie sind aber in Bezug auf den Umfang der Erfindung nicht einschränkend zu verstehen. Dasselbe gilt für die CO-Konvertierungsbedingungen.

Unter einer Sorptionsvorrichtung wird eine Vorrichtung verstanden, die zur Stofftrennung mittels physikalischer oder chemischen Adsorptions- oder Absorptionsverfahren bestimmt und geeignet ist, wobei unter der Adsorption das Anhaften an eine Oberfläche und unter der Absorption die Aufnahme in ein Phasenvolumen verstanden wird. Bei der chemischen Sorption erfolgt die Bindung der zu sorbierenden Komponente an das Sorptionsmittel oder Sorbens mittels spezifischer chemischer Wechselwirkungen jedweder Art, also beispielsweise mittels kovalenter Bindungen oder Wasserstoffbrückenbindungen. Alle anderen, nicht chemischen Sorptionsverfahren werden als physikalische Sorptionsverfahren verstanden.

Unter einem Aufteilen oder Auftrennen bzw. Abtrennen eines Stoffstroms ist im Zusammenhang mit der vorliegenden Erfindung die Erzeugung mindestens zweier Teilströme aus dem ursprünglichen Stoffstrom zu verstehen, wobei mit dem Auftrennen bzw. Abtrennen eine beabsichtigte Änderung der stofflichen Zusammensetzung der erhaltenen Teilströme in Bezug auf den ursprünglichen Stoffstrom verbunden ist, beispielsweise durch Anwendung eines thermischen Trennverfahrens auf den ursprünglichen Stoffstrom. Dagegen ist mit dem Aufteilen des ursprünglichen Stoffstroms in der Regel keine Änderung der stofflichen Zusammensetzung der erhaltenen Teilströme verbunden.

Die Angabe, dass ein Stoffstrom direkt einer spezifischen Verfahrensstufe oder einem spezifischen Anlagenteil zugeführt wird, ist so zu verstehen, dass der Stoffstrom in diese Verfahrensstufe oder diesen Anlagenteil eingeleitet wird, ohne dass zuvor ein Durchleiten durch andere Verfahrensstufen oder Anlagenteile erfolgte, mit Ausnahme reiner Transportvorgänge und der dazu benötigten Mittel, beispielsweise Rohrleitungen, Ventile, Pumpen, Verdichter, Vorratsbehälter.

Alle etwaigen Druckangaben erfolgen als Absolutdruckeinheiten, abgekürzt bar, oder als Überdruckeinheiten, abgekürzt barg, wenn im jeweiligen Einzelzusammenhang nichts anderes angegeben wird.

Unter Fluidverbindung zwischen zwei Bereichen der erfindungsgemäßen Vorrichtung wird dabei jegliche Art von Verbindung verstanden, die es ermöglicht, dass ein Fluid, beispielsweise ein Gasstrom, von dem einen zu dem anderen der beiden Bereiche strömen kann, unbeachtlich etwaiger zwischengeschalteter Bereiche oder Bauteile.

Unter einem Mittel wird eine Sache verstanden, die die Erreichung eines Zieles ermöglicht oder dabei behilflich ist. Insbesondere werden unter Mitteln zum Durchführen eines bestimmten Verfahrensschrittes alle diejenigen physischen Gegenstände verstanden, die der Fachmann in Betracht ziehen würde, um diesen Verfahrensschritt durchführen zu können. Beispielsweise wird der Fachmann als Mittel zum Einleiten oder Ausleiten eines Stoffstroms alle Transport- und Fördervorrichtungen, also z. B. Rohrleitungen, Pumpen, Verdichter, Ventile, in Betracht ziehen, die ihm aufgrund seines Fachwissens zur Durchführung dieses Verfahrensschrittes notwendig oder sinnvoll erscheinen.

Als Synthesegasproduktstrom, der als Oxogas für die Oxosynthese geeignet ist, wird ein Synthesegasproduktstrom aufgefasst, der die Anforderungen an ein gefordertes, molares H₂/CO-Verhältnis erfüllt. Dies ist insbesondere dann der Fall, wenn das H₂/CO-Verhältnis des Synthesegasproduktstroms zwischen 1,25 und 0,75 mol/mol beträgt. In der technischen Praxis der Oxosynthese ist ein molares Verhältnis von Wasserstoff zu Kohlenstoffmonoxid von beispielsweise 1,5 mol/mol erwünscht. Der hinsichtlich der Stöchiometrie der Hydroformylierungsreaktion überschüssige Wasserstoff wird in der parallel ablaufenden Hydrierung der Aldehyde zu Alkoholen verbraucht.

Die Erfindung betrifft in einer bevorzugten Ausgestaltung die Erzeugung eines wasserstoffreichen Synthesegasgemisches durch Partialoxidation, allotherme oder autotherme Dampfreformierung von kohlenwasserstoffhaltigen Einsatzstoffen, gefolgt von partieller CO-Konvertierung (Wassergas-Shift-Konvertierung), Abtrennung saurer Gasbestandteile wie CO₂ und ggf. H₂S mittels eines Sorptionsverfahrens, beispielsweise mittels eines Gaswaschverfahrens wie des Rectisol-Verfahrens, und die Auftrennung dieses Synthesegasgemisches in ein beispielsweise für die Oxosynthese einsetzbares Synthesegas und Reinwasserstoff über eine Kombination zweier Wasserstoffanreicherungsstufen, die als Membrantrennung und Druckwechseladsorption ausgestaltet sind. Dieses Verfahren differenziert sich von Verfahrens des Stands der Technik durch den Verzicht auf kostenintensive Trennoperationen wie kryogene Gaszerlegungsverfahren oder eine getrennte Aufbereitung des Rohgases aus der Gaserzeugung für die jeweiligen Zielprodukte.

Mittels der ersten Wasserstoffanreicherungsstufe, die als Membrantrennung ausgestaltet ist, kann ein Synthesegasprodukt mit der gewünschten Zusammensetzung direkt als Retentat aus wasserstoffreichem Rohsynthesegas bei hohem Produktdruck erzeugt werden. Das gegenüber dem Rohsynthesegas an Wasserstoff angereicherte Permeat wird, gegebenenfalls gemischt mit einem Teilstrom des Einsatzgases und/oder verdichtet, mittels der zweiten Wasserstoffanreicherungsstufe, einer Druckwechseladsorption (PSA), zu Wasserstoff hoher Reinheit aufbereitet. Der Rückstand aus der Druckwechseladsorption kann verdichtet und mit dem Synthesegasprodukt zusammengeführt oder anderweitig, beispielsweise als Brenngas, verwendet werden.

Gemäß des Stands der Technik finden folgende Verfahrenssequenzen zur Erzeugung von Synthesegasprodukten mit oder ohne Koproduktion von Reinwasserstoff Anwendung:
(a) Synthesegaserzeugung, ggf. partielle Wassergas-Shift-Konvertierung, CO₂-Abtrennung, kryogene Zerlegung zur Trennung von Wasserstoff und CO zur Einstellung des H₂/CO-Verhältnisses im Synthesegasprodukt (z. B. Oxogas), PSA zur Aufreinigung des verbleibenden Wasserstoffs. Nachteilig ist hierbei die Anwendung des kostenintensiven und hochkomplexen kyrogenen Zerlegungsverfahrens.
(b) Synthesegaserzeugung, ggf. partielle Wassergas-Shift-Konvertierung, CO₂-Abtrennung, PSA zur Abtrennung des Synthesegasprodukts mit bestimmtem H₂/CO-Verhältnis und gleichzeitiger Aufreinigung des Wasserstoffs zur Gewinnung von Reinwasserstoff. Nachteilig ist es hierbei, dass bedingt durch den niedrigen Arbeitsdruck der PSA das Synthesegasprodukt, beispielsweise das Oxogas, bei niedrigem Druck erhalten wird und für die nachfolgende Verwendung verdichtet werden muss. Ferner können Reinheitsanforderungen für das Synthesegasprodukt häufig nicht erfüllt werden, da es gleichsam als Abfallprodukt der PSA erhalten wird, und es kommt aufgrund des zyklischen Betriebs der PSA zu zeitlichen Fluktuationen der Zusammensetzung des Synthesegasprodukts. Schließlich ist auch die niedrige Verfügbarkeit durch Kombination von PSA und Kompressor nachteilig. Das PSA-Verfahren basiert auf einer großen Anzahl aktiver Regelkomponenten, z. B. schnell schaltende Ventile, die verschleiß- und damit ausfallanfällig sind. Dies wird durch einen Notbetriebsmodus kompensiert, beispielsweise einen Notbetrieb mit nur einem Teil der üblichen Anzahl von Einzeladsorbern der Gesamtanlage. Hierbei wird Reinwasserstoff zwar mit der benötigten Reinheit, aber nur mit reduzierter Kapazität erhalten. Dadurch wird aber die Reinwasserstoff-Ausbeute herabgesetzt und somit die Zusammensetzung des Synthesegasprodukts deutlich verändert.

Kompressoren sind durch die Vielzahl an beweglichen mechanischen Elementen generell Risikokomponenten und werden deshalb oft mehrfach redundant ausgeführt, um länger andauernde Anlagenstillstände zu verhindern. Dies zieht erhöhte Investitionskosten nach sich. Außerdem kann das Umschalten auf den Reservekompressor häufig einen Anlagenausfall und -Neustart nicht verhindern. Die Redundanz dient in erster Linie der Verhinderung mehrwöchiger Stillstände.

(c) Synthesegaserzeugung, Auftrennung des Rohsynthesegases in zwei Teilströme, vollständige Wassergas-Shift-Konvertierung, CO₂- und ggf. H₂S-Abtrennung, Aufreinigung des ersten Teilstroms zu Reinwasserstoff mittels PSA, separate CO₂- und ggf. H₂S-Abtrennung zum Synthesegasprodukt für den zweiten Teilstrom. Nachteilig sind hier insbesondere die spezifisch hohen Investitionskosten für die Behandlung des Synthesegasprodukt-Stroms, insbesondere bei Koproduktion einer kleinen Menge des Synthesegasprodukts neben großen Menge an Reinwasserstoff. Es besteht nur eine geringe Flexibilität zur Variation der Produktmengen und es gibt keine direkte Möglichkeit zur Beeinflussung des H₂/CO-Verhältnisses im Synthesegasprodukt. Ferner sind auch die hohe Komplexität der Verfahrenskette und die erheblichen Kosten von Nachteil, die aus Maßnahmen zur Sicherstellung einer hohen Verfügbarkeit des Synthesegasprodukts resultieren.

Insbesondere die Kombination einer Synthesegaserzeugung auf Basis einer nichtkatalytischen Partialoxidation mit einer Gasreinigung, beispielweise mittels physikalischer Gaswäsche, bietet die Möglichkeit, auf einfache Weise ein H₂/CO-Gemisch mit einem sehr niedrigen Anteil an Verunreinigungen zu erhalten. Ist Wasserstoff das Hauptprodukt der zu optimierenden Prozessschaltung, gestaltet sich die nachfolgende effiziente Abtrennung eines vergleichsweise kleinen Stroms mit niedrigem H₂/CO-Verhältnis jedoch schwierig. Hier konnte entgegen der ursprünglichen Erwartung gefunden werden, dass eine Membrantrennung sehr gut für diese Aufgabenstellung geeignet ist, wobei das Permeat überraschend bei vergleichsweise hohem Druck erhalten wird und somit gut für die weitere Aufreinigung zu Wasserstoff geeignet ist.

Das Verfahren und die Anlage gemäß der Erfindung zeichnen sich durch hohe Flexibilität aus. Sie ermöglichen die Anpassung des H₂/CO-Verhältnisses im Rohsynthesegas durch partielle Wassergas-Shift-Konvertierung mit Bypass im Zusammenwirken mit der ersten und zweiten Wasserstoffanreicherungsstufe, insbesondere durch Einstellen bzw. Variieren der Druck- und Mengenstromverhältnisse in den als Membrantrennvorrichtung und PSA ausgestalteten Wasserstoffanreicherungsstufen. Je nach Anforderungen zu den Mengenverhältnissen der Produkte kann dabei die Verdichterleistung minimiert werden.

Synthesegas wird erzeugt durch Partialoxidation oder Dampfreformierung oder autotherme Reformierung von kohlenwasserstoffhaltigen Einsatzstoffen. Aus dem erhaltenen Rohsynthesegas wird optional mittels CO-Konvertierung (Wassergas-Shift-Reaktion) mit einer geeigneten Anzahl von Konvertierungsstufen, typischerweise eine bis drei Konvertierungsstufen, und ggf. einem Bypass von unkonvertiertem Rohsynthesegas um die CO-Konvertierungsstufen herum, ein Molverhältnis von Wasserstoff zu Kohlenstoffmonoxid eingestellt, das demjenigen der Summe der gewünschten Produktströme entspricht. Aus diesem an Wasserstoff angereicherten Rohsynthesegas wird durch ein geeignetes Verfahren, beispielsweise eine chemische oder physikalische Wasche, saure Gasbestandteile wie CO₂ sowie ggf. H₂S abgetrennt. Der CO₂-Gehalt des so gereinigten Gases orientiert sich an der geforderten Reinheit für das Synthesegasprodukt und kann beispielsweise bei Verwendung als Oxogas im Bereich von 1 bis 100 vol.-ppm liegen. Der Druck des gereinigten Synthesegasstroms orientiert sich an der Auswahl des Verfahrens zur Synthesegaserzeugung und dem gewünschten Lieferdruck für das Synthesegasprodukt und kann beispielsweise bei Verwendung als Oxogas im Bereich von 50 bar liegen. Ein Beispiel hierfür ist die Erzeugung von Hochdruck-Oxogas mittels POX.

Ein Teilstrom des entsäuerten Synthesegases wird einer Membraneinheit zugeführt und ggf. auf eine für den Membran-Trennprozess geeignete Temperatur, z. B. 80 °C, aufgeheizt oder abgekühlt. Durch Auswahl von Membrantyp und Permeatdruck wird das H₂/CO-Verhältnis im Retentat entsprechend der Produktspezifikation eingestellt, beispielsweise in einem Bereich von 0,75 bis 1,25, für viele Anwendungsfälle bei 1,0, für andere Anwendungsfälle bei 1,5. Gegebenenfalls kann anschließend eine Feinreinigung des als Retentat erhaltenen Oxogases erfolgen, beispielsweise durch Entfernung von Spuren von CO₂ durch ein geeignetes Verfahren wie die Temperaturwechseladsorption.

Das Permeat aus der Membran-Trenneinheit, das typischerweise bei einem Druck von 10 bis 30 bar anfällt, wird bei entsprechend hoher Anforderung bezüglich des Wasserstoff-Lieferdrucks oder zur Optimierung von Effizienz und Kosten der PSA-Einheit verdichtet, beispielsweise auf einen dem Synthesegasdruck entsprechendes Niveau von etwa 50 bar. Je nach Anforderungen bezüglich der Wasserstoff-Produktmenge kann das Permeat mit einem Teilstrom des entsäuerten Synthesegases aus der CO₂-Abtrennung kombiniert werden und wird der PSA-Einheit zur Aufreinigung des Wasserstoffs zugeführt. Die Reinheit des resultierenden Wasserstoff-Stroms liegt typischerweise bei 99,9 %, die Rückgewinnungsrate der PSA-Einheit im Bereich von 80 bis über 90%. Das bei niedrigem Druck anfallende Restgas kann, ggf. nach Verdichtung, als Brenngas eingesetzt werden. Da bei geeigneter Wahl der Verteilung des Synthesegases auf Membran-Trennung und PSA-Trennung und der weiteren Prozessparameter wie Druckverhältnisse auch dieses Restgas in Qualität und Zusammensetzung nahe an diejenige des aus der Membran-Trenneinheit erhaltenen Synthesegasproduktstroms heranreichen kann, ist optional auch eine Verdichtung und Zusammenführung mit dem Synthesegasproduktstroms möglich, ggf. mit separater oder gemeinsamer Feinreinigung wie oben beschrieben. Art und Konzentrationen der möglichen Verunreinigungskomponenten können sich unterscheiden. Daher kann es sinnvoll sein, einen oder beide Ströme vor Zusammenführung getrennt zu reinigen, oder alternativ den kombinierten Strom gemeinsam zu reinigen, falls beispielsweise die Verunreinigungen sehr ähnlich sind. Für die Feinreinigung werden häufig vergleichsweise kostspielige feste Adsorbentien eingesetzt; daher sollte der zu behandelnde Gasstrom idealerweise möglichst klein und die Konzentration der zu entfernenden Komponente eher hoch sein. Eine Verdünnung des zu reinigenden Stroms mit einem bereits vergleichsweise sauberen Strom führt zu Kostensteigerung, da größere Adsorbensmengen und größere Behälter benötigt werden. In diesem Fall ist insbesondere die Gesamtleistung der Verdichter ein wichtiger Optimierungsparameter bei der Wahl der Prozessparameter für die Membran-PSA-Kombination.

### Bevorzugte Ausgestaltungen der Erfindung

Ein zweiter Aspekt des erfindungsgemäßen Verfahrens ist dadurch gekennzeichnet, dass der Anteil 1, also der zu der CO-Konvertierungsanlage geführte Anteil des Rohsynthesegasstroms, zwischen 0 % und 100 % des Rohsynthesegasstroms beträgt und/oder der Anteil 2, also der zu der ersten Wasserstoffanreicherungsstufe geführte Anteil des entsäuerten Synthesegasstroms, zwischen 0 % und 100 % des entsäuerten Synthesegasstroms beträgt. Auf diese Weise kann die Zusammensetzung des Synthesegasprodukts in weiten Grenzen verändert und eingestellt werden.

Ein dritter Aspekt des erfindungsgemäßen Verfahrens ist dadurch gekennzeichnet, dass ein Anteil 3 des Kohlenmonoxid enthaltenden Restgasstroms in den Synthesegasproduktstrom geführt wird und der Anteil 1 und/oder der Anteil 2 und/oder der Anteil 3 so gewählt wird, dass sich das für den Synthesegasproduktstrom geforderte H₂/CO-Verhältnis ergibt. Auf diese Weise kann die Zusammensetzung des Synthesegasprodukts zielgerichtet verändert und eingestellt werden, beispielsweise um ein Oxogas mit vordefinierter Zusammensetzung zu erzeugen.

Ein vierter Aspekt des erfindungsgemäßen Verfahrens ist dadurch gekennzeichnet, dass der Anteil 1 zwischen 0 % und 100 % des Rohsynthesegasstroms beträgt und/oder der Anteil 2 zwischen 0 % und 100 % des entsäuerten Synthesegasstroms beträgt und/oder der Anteil 3 zwischen 0 % und 100 % des Kohlenmonoxid enthaltenden Restgasstroms beträgt. Auf diese Weise ergeben sich zusätzliche Freiheitsgrade für die Einstellung der Zusammensetzung des Synthesegasprodukt in weiten Grenzen.

Ein fünfter Aspekt des erfindungsgemäßen Verfahrens ist dadurch gekennzeichnet, dass das molare H₂/CO-Verhältnis des Synthesegasproduktstroms zwischen 10 und 0,1 mol/mol, bevorzugt zwischen 5 und 0,5 mol/mol, weiter bevorzugt zwischen 2 und 1 mol/mol, meist bevorzugt zwischen 1,25 und 0,75 mol/mol beträgt. Somit kann zielgerichtet für unterschiedliche Verfahren, die Synthesegas unterschiedlicher Zusammensetzung als Einsatzstoff benötigen, die jeweils optimale Zusammensetzung eingestellt werden, beispielsweise die Methanolsynthese, die Fischer-Tropsch-Synthese oder die Oxosynthese.

Ein sechster Aspekt des erfindungsgemäßen Verfahrens ist dadurch gekennzeichnet, dass der Rohsynthesegasstrom abzüglich des Anteils 1 direkt der Sorptionsvorrichtung zugeführt wird. Da hierbei dieser Stoffstrom unmittelbar der Sorptionsvorrichtung zugeführt wird, ohne dass zuvor ein Durchleiten durch andere Verfahrensstufen oder Anlagenteile erfolgt, werden unerwünschte Änderungen der Synthesegaszusammensetzung vermieden und es wird der Wasserstoffverlust und der Druckverlust minimiert und die Ausbeute des Verfahrens an Reinwasserstoff und seine Energieeffizienz erhöht.

Ein siebter Aspekt des erfindungsgemäßen Verfahrens ist dadurch gekennzeichnet, dass der entsäuerte Synthesegasstrom abzüglich des Anteils 2 direkt der zweiten Wasserstoffanreicherungsstufe zugeführt wird. Da hierbei dieser Stoffstrom unmittelbar der der zweiten Wasserstoffanreicherungsstufe zugeführt wird, ohne dass zuvor ein Durchleiten durch andere Verfahrensstufen oder Anlagenteile erfolgt, werden unerwünschte Änderungen der Synthesegaszusammensetzung vermieden und es wird der Wasserstoffverlust und der Druckverlust minimiert und die Ausbeute des Verfahrens an Reinwasserstoff und seine Energieeffizienz erhöht.

Ein achter Aspekt des erfindungsgemäßen Verfahrens ist dadurch gekennzeichnet, dass der Restgasstrom abzüglich des Anteils 3 als Brenngas aus dem Verfahren ausgeleitet wird. Hierdurch kann ein Reststoffstrom entsorgt und thermisch genutzt werden.

Ein neunter Aspekt des erfindungsgemäßen Verfahrens ist dadurch gekennzeichnet, dass der Kohlenmonoxid enthaltende Restgasstrom vor Zuführen zum Synthesegasproduktstrom verdichtet wird. Hierdurch kann ein Reststoffstrom entsorgt und stofflich genutzt werden.

Ein zehnter Aspekt des erfindungsgemäßen Verfahrens ist dadurch gekennzeichnet, dass der Kohlenmonoxid enthaltende Restgasstrom vor Zuführen zum Synthesegasproduktstrom einer Feinreinigungsstufe zugeführt wird oder nach Zuführen zum Synthesegasproduktstrom einer gemeinsamen Feinreinigungsstufe zugeführt wird. Die Feinreinigungsstufe kann dabei beispielsweise so ausgestaltet sein, dass z. B. Spuren von CO₂ durch ein geeignetes Verfahren wie die Temperaturwechseladsorption entfernt werden können. Art und Konzentrationen der möglichen Verunreinigungskomponenten können sich unterscheiden. Daher kann es sinnvoll sein, einen oder beide Ströme vor Zusammenführung getrennt zu reinigen, oder alternativ den kombinierten Strom gemeinsam zu reinigen, falls beispielsweise die Verunreinigungen sehr ähnlich sind. Für die Feinreinigung werden häufig vergleichsweise kostspielige feste Adsorbentien eingesetzt; daher sollte der zu behandelnde Gasstrom idealerweise möglichst klein und die Konzentration der zu entfernenden Komponente eher hoch sein.

Ein elfter Aspekt des erfindungsgemäßen Verfahrens ist dadurch gekennzeichnet, dass der an Wasserstoff angereicherte Permeatstrom vor Zuführen zu der zweiten Wasserstoffanreicherungsstufe verdichtet wird.

In einem weiteren Aspekt ist die erfindungsgemäße Anlage dadurch gekennzeichnet, dass die Mittel zum Aufteilen des Rohsynthesegasstroms und die Mittel zum Aufteilen des entsäuerten Synthesegasstroms so beschaffen sind, dass der Anteil 1 und/oder der Anteil 2 so gewählt werden kann, dass sich das für den Synthesegasproduktstrom geforderte molare H₂/CO-Verhältnis ergibt. Auf diese Weise kann die Zusammensetzung des Synthesegasprodukts zielgerichtet verändert und eingestellt werden, beispielsweise um ein Oxogas mit vordefinierter Zusammensetzung zu erzeugen.

In einem weiteren Aspekt ist die erfindungsgemäße Anlage dadurch gekennzeichnet, dass ferner Mittel zum Aufteilen des Kohlenmonoxid enthaltenden Restgasstroms und Mittel zum Einleiten eines Anteils 3 des Kohlenmonoxid enthaltenden Restgasstroms in den Synthesegasproduktstrom umfasst werden, wobei die Mittel so beschaffen sind, dass der Anteil 1 und/oder der Anteil 2 und/oder der Anteil 3 so gewählt werden kann, dass sich das für den Synthesegasproduktstrom geforderte H₂/CO-Verhältnis ergibt. Auch auf diese Weise kann die Zusammensetzung des Synthesegasprodukts zielgerichtet verändert und eingestellt werden, beispielsweise um ein Oxogas mit vordefinierter Zusammensetzung zu erzeugen.

In einem weiteren Aspekt ist die erfindungsgemäße Anlage dadurch gekennzeichnet, dass ferner Mittel umfasst werden, die es gestatten, dass der Kohlenmonoxid enthaltende Restgasstrom vor Zuführen zum Synthesegasproduktstrom verdichtet werden kann. Hierdurch kann ein Reststoffstrom entsorgt und stofflich genutzt werden.

In einem weiteren Aspekt ist die erfindungsgemäße Anlage dadurch gekennzeichnet, dass ferner Mittel umfasst werden, die es gestatten, dass der Kohlenmonoxid enthaltende Restgasstrom vor Zuführen zum Synthesegasproduktstrom einer Feinreinigung unterzogen wird oder nach Zuführen zum Synthesegasproduktstrom einer gemeinsamen Feinreinigung unterzogen wird. Die Feinreinigungsstufe kann dabei beispielsweise so ausgestaltet sein, dass z. B. Spuren von CO₂ durch ein geeignetes Verfahren wie die Temperaturwechseladsorption entfernt werden können. Art und Konzentrationen der möglichen Verunreinigungskomponenten können sich unterscheiden. Daher kann es sinnvoll sein, einen oder beide Ströme vor Zusammenführung getrennt zu reinigen, oder alternativ den kombinierten Strom gemeinsam zu reinigen, falls beispielsweise die Verunreinigungen sehr ähnlich sind. Für die Feinreinigung werden häufig vergleichsweise kostspielige feste Adsorbentien eingesetzt; daher sollte der zu behandelnde Gasstrom idealerweise möglichst klein und die Konzentration der zu entfernenden Komponente eher hoch sein.

### Ausführungsbeispiel

Weiterbildungen, Vorteile und Anwendungsmöglichkeiten der Erfindung ergeben sich auch aus der nachfolgenden Beschreibung von Ausführungsbeispielen und der Zeichnungen. Dabei bilden alle beschriebenen und/oder bildlich dargestellten Merkmale für sich oder in beliebiger Kombination die Erfindung, unabhängig von ihrer Zusammenfassung in den Ansprüchen oder deren Rückbeziehung.

Es zeigen:
Fig. 1 ein erstes Beispiel eines Verfahrens bzw. einer Anlage zum Herstellen eines Oxogases gemäß Stand der Technik,
Fig. 2 ein zweites Beispiel eines Verfahrens bzw. einer Anlage zum Herstellen eines Oxogases gemäß Stand der Technik,
Fig. 3 ein drittes Beispiel eines Verfahrens bzw. einer Anlage zum Herstellen eines Oxogases gemäß Stand der Technik,
Fig. 4 ein Ausführungsbeispiel eines Verfahrens bzw. einer Anlage gemäß der Erfindung zum Herstellen eines Oxogases.

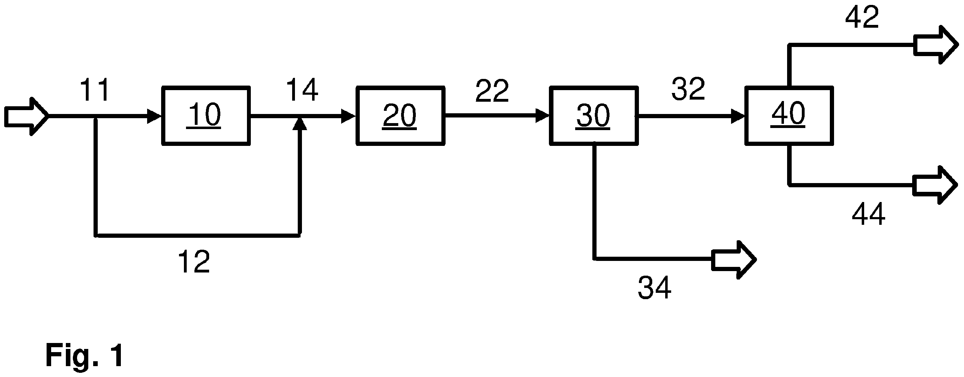

Die Figuren 1 bis 4 sind als Blockschaltbilder dargestellt, die die wesentlichen Funktionsblöcke und wichtige Verbindungsleitungen zwischen diesen zeigen, ohne das einzelne Armaturen und Ausrüstungsteile wie beispielsweise Wärmetauscher, Heizer, Kühler, Ventile, Mischvorrichtungen, Verbindungsvorrichtungen, Aufteilvorrichtungen, Pumpen, Gebläse, Verdichter separat dargestellt sind. Die benötigten Armaturen und Ausrüstungsteile wird der Fachmann anhand seines Fachwissens anhand seines Fachwissens über allgemeine Anforderungen des jeweiligen Funktionsblocks und/oder nachfolgende, spezifische Angaben auswählen und dimensionieren können. Dasselbe gilt für etwaige benötigte Hilfsstoffströme, beispielsweise den bei der CO-Konvertierung als Reaktionspartner benötigten Wasserdampf.

In dem in Fig. 1 gezeigten Blockschaltbild gemäß eines ersten Beispiels des Verfahrens bzw. der Anlage gemäß Stand der Technik wird über Leitung 11 ein Anteil eines Rohsynthesegases, das mittels einer nicht bildlich dargestellten Synthesegaserzeugungsanlage, die beispielsweise als Dampfreformierungsstufe, als Autothermreformierungsstufe, als Partialoxidationsstufe oder als Kombination mindestens zweier der vorgenannten Synthesegaserzeugungsstufen ausgestaltet ist, zu einer mindestens eine CO-Konvertierungsstufe umfassenden CO-Konvertierungsanlage 10 geführt und in diese eingeleitet. In der CO-Konvertierungsanlage erfolgt das Umsetzen des eingeleiteten Anteils 1 des Rohsynthesegasstroms unter CO-Konvertierungsbedingungen zu einem konvertierten Synthesegasstrom, der nachfolgend über Leitung 14 aus der CO-Konvertierungsanlage ausgeleitet wird. Mittels der als Bypass bzw. Umgang geschalteten Leitung 12 wird der verbliebene Anteil des Rohsynthesegases um die CO-Konvertierungsanlage herumgeführt und direkt in die Leitung 14 eingeleitet.

Der aus konvertiertem Synthesegas und unkonvertiertem Rohsynthesegas erhaltene Mischgasstrom wird über Leitung 14 in eine in eine Sorptionsvorrichtung 20 zur Entfernung saurer Gasbestandteile, insbesondere Kohlendioxid und Schwefelwasserstoff, mittels eines physikalischen oder chemischen Sorptionsverfahrens eingeleitet. Diese kann beispielsweise als Gaswäsche mit tiefkaltem Methanol als Absorbens bzw. Waschmittel nach dem an sich bekannten Rectisol-Verfahren ausgestaltet werden. Über Leitung 22 erfolgt sodann das Ausleiten eines entsäuerten Synthesegasstroms aus der Sorptionsvorrichtung und das Einleiten in eine Anlage zur kryogenen Gaszerlegung 30.

In der Anlage zur kryogenen Gaszerlegung, die beispielsweise als Flüssigmethanwäsche oder als Partialkondensation ausgestaltet sein kann, erfolgt die Abtrennung eines Synthesegasproduktstroms, beispielsweise eines Oxogasstroms, der über Leitung 34 aus dem Verfahren bzw. der Anlage ausgeleitet und einer nachfolgenden, nicht bildlich dargestellten Lagerung, Behandlung oder Weiterverarbeitung zugeführt werden kann.

Ferner wird bei der kryogenen Gaszerlegung ein an Wasserstoff angereicherter Synthesegasstrom erhalten, der über Leitung 32 einer Druckwechseladsorptionsanlage 40 zugeführt wird.

In der Druckwechseladsorptionsanlage erfolgt die Auftrennung des an Wasserstoff angereicherten Synthesegasstroms in einen Reinwasserstoffproduktstrom, der als weiterer Produktstrom über Leitung 42 aus der Druckwechseladsorptionsanlage ausgeleitet und einer nachfolgenden, nicht bildlich dargestellten Lagerung, Behandlung oder Weiterverarbeitung zugeführt werden kann. Ferner wird ein Restgasstrom erhalten, der noch Kohlenmonoxid und ggf. Methan, Argon und weitere Verunreinigungen umfasst. Er wird über Leitung 44 aus der Druckwechseladsorptionsanlage ausgeleitet und kann einer nachfolgenden, nicht bildlich dargestellten Lagerung, Behandlung oder Weiterverarbeitung zugeführt werden. Aufgrund seines Heizwertes wird er häufig als Brenngasstrom genutzt und beispielweise der Synthesegaserzeugungsanlage zugeführt.

Nachteilig ist bei dem in Fig. 1 gezeigten Verfahren die Anwendung des kostenintensiven und hochkomplexen kyrogenen Zerlegungsverfahrens. Eine Änderung der Zusammensetzung des Synthesegasprodukts ist nur schwierig und in engen Grenzen möglich und bedingt tiefe Eingriffe in die kryogene Gaszerlegung.

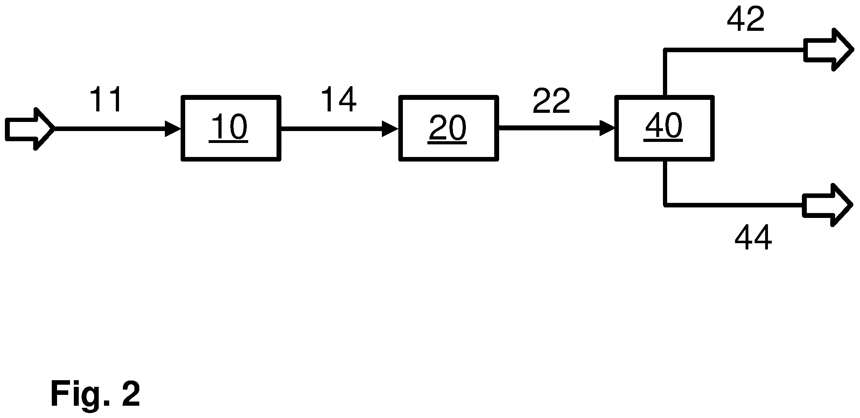

In dem in Fig. 2 gezeigten Blockschaltbild gemäß eines zweiten Beispiels des Verfahrens bzw. der Anlage gemäß Stand der Technik wird über Leitung 11 das gesamte Rohsynthesegas, das mittels einer nicht bildlich dargestellten Synthesegaserzeugungsanlage, die beispielsweise als Dampfreformierungsstufe, als Autothermreformierungsstufe, als Partialoxidationsstufe oder als Kombination mindestens zweier der vorgenannten Synthesegaserzeugungsstufen ausgestaltet ist, zu einer mindestens eine CO-Konvertierungsstufe umfassenden CO-Konvertierungsanlage 10 geführt und in diese eingeleitet. Ein Umgang um die CO-Konvertierungsanlage herum fehlt in diesem Ausführungsbeispiel.

In der CO-Konvertierungsanlage erfolgt das Umsetzen des Rohsynthesegasstroms unter CO-Konvertierungsbedingungen zu einem konvertierten Synthesegasstrom, der nachfolgend über Leitung 14 aus der CO-Konvertierungsanlage ausgeleitet wird. Je nach Ausgestaltung und Durchführung der CO-Konvertierung kann entweder ein vollständiger oder partieller Umsatz von CO zu H₂ und CO₂ erzielt werden, so dass hierdurch gewisse Einstellmöglichkeiten für das zu erzielende H₂/CO-Verhältnis im Synthesegasprodukt bestehen.

Der konvertierte Rohsynthesegasstrom wird über Leitung 14 in eine in eine Sorptionsvorrichtung 20 zur Entfernung saurer Gasbestandteile, insbesondere Kohlendioxid und Schwefelwasserstoff, mittels eines physikalischen oder chemischen Sorptionsverfahrens eingeleitet. Diese kann beispielsweise als Gaswäsche mit tiefkaltem Methanol als Absorbens bzw. Waschmittel nach dem an sich bekannten Rectisol-Verfahren ausgestaltet werden. Über Leitung 22 erfolgt sodann das Ausleiten eines entsäuerten Synthesegasstroms aus der Sorptionsvorrichtung und das Einleiten in eine Druckwechseladsorptionsanlage 40.

In der Druckwechseladsorptionsanlage erfolgt die Auftrennung des an Wasserstoff angereicherter Synthesegasstroms in einen Reinwasserstoffproduktstrom, der als Produktstrom über Leitung 42 aus der Druckwechseladsorptionsanlage ausgeleitet und einer nachfolgenden, nicht bildlich dargestellten Lagerung, Behandlung oder Weiterverarbeitung zugeführt werden kann. Ferner wird ein Synthesegasproduktstrom erhalten, der über Leitung 44 aus der Druckwechseladsorptionsanlage ausgeleitet wird und einer nachfolgenden, nicht bildlich dargestellten Lagerung, Behandlung oder Weiterverarbeitung zugeführt werden kann. Aufgrund seines Heizwertes wird er häufig als Brenngasstrom genutzt und beispielweise der Synthesegaserzeugungsanlage zugeführt.

Nachteilig bei dem in Fig. 2 gezeigten Verfahren ist es, dass bedingt durch den niedrigen Arbeitsdruck der PSA das Synthesegasprodukt, beispielsweise das Oxogas, bei niedrigem Druck erhalten wird und für die nachfolgende Verwendung verdichtet werden muss. Ferner können Reinheitsanforderungen für das Synthesegasprodukt häufig nicht erfüllt werden, da es gleichsam als Abfallprodukt der PSA erhalten wird, und es kommt aufgrund des zyklischen Betriebs der PSA zu zeitlichen Fluktuationen der Zusammensetzung des Synthesegasprodukts. Schließlich ist auch die niedrige Verfügbarkeit des Synthesegasprodukts durch Kombination von PSA und Kompressor nachteilig.

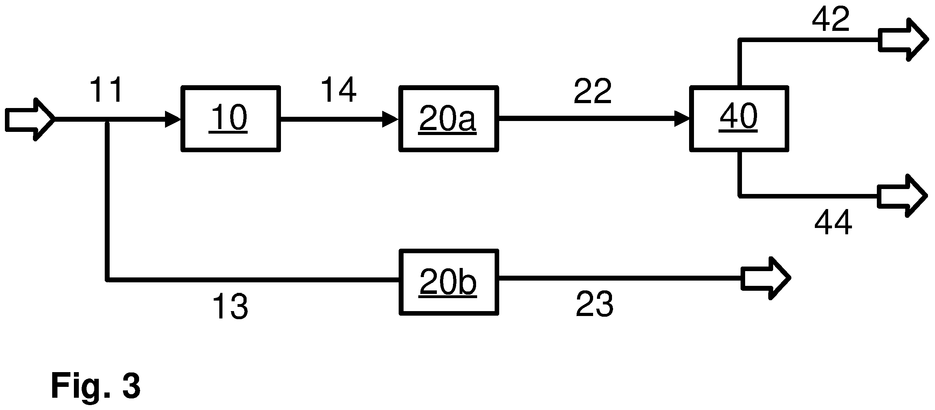

In dem in Fig. 3 gezeigten Blockschaltbild gemäß eines dritten Beispiels des Verfahrens bzw. der Anlage gemäß Stand der Technik wird ein Rohsynthesegasstrom, der mittels einer nicht bildlich dargestellten Synthesegaserzeugungsanlage gewonnen wurde, die beispielsweise als Dampfreformierungsstufe, als Autothermreformierungsstufe, als Partialoxidationsstufe oder als Kombination mindestens zweier der vorgenannten Synthesegaserzeugungsstufen ausgestaltet ist, in zwei Anteile aufgeteilt, die über die Leitungen 11 und 13 weitergeführt werden. Über Leitung 11 wird der erste Anteil zu einer mindestens eine CO-Konvertierungsstufe umfassenden CO-Konvertierungsanlage 10 geführt und in diese eingeleitet. In der CO-Konvertierungsanlage erfolgt das Umsetzen des eingeleiteten Anteils des Rohsynthesegasstroms unter CO-Konvertierungsbedingungen zu einem konvertierten Synthesegasstrom, der nachfolgend über Leitung 14 aus der CO-Konvertierungsanlage ausgeleitet und in eine erste Sorptionsanlage 20a eingeleitet wird. Der verbliebene Anteil des Rohsynthesegasstroms, der unkonvertiert ist, wird über Leitung 13 in eine zweite Sorptionsanlage 20a eingeleitet.

In der ersten und zweiten Sorptionsvorrichtung 20a, 20b erfolgt eine Entfernung saurer Gasbestandteile, insbesondere Kohlendioxid und Schwefelwasserstoff, mittels eines physikalischen oder chemischen Sorptionsverfahrens. Die Sorptionsvorrichtungen können beispielsweise als Gaswäsche mit tiefkaltem Methanol als Absorbens bzw. Waschmittel nach dem an sich bekannten Rectisol-Verfahren ausgestaltet werden. Über Leitung 22 erfolgt sodann das Ausleiten eines konvertierten, entsäuerten Synthesegasstroms aus der Sorptionsvorrichtung 20a und das Einleiten in eine Druckwechseladsorptionsanlage 40. Über Leitung 23 wird dagegen ein unkonvertierter, entsäuerter Synthesegasstrom als Synthesegasprodukt aus der Sorptionsvorrichtung 20b aus dem Verfahren ausgeleitet und kann einer nachfolgenden, nicht bildlich dargestellten Lagerung, Behandlung oder Weiterverarbeitung, beispielsweise als Oxogas, zugeführt werden.

In der Druckwechseladsorptionsanlage erfolgt die Auftrennung des konvertierten, entsäuerten Synthesegasstroms in einen Reinwasserstoffproduktstrom, der als weiterer Produktstrom über Leitung 42 aus der Druckwechseladsorptionsanlage ausgeleitet und einer nachfolgenden, nicht bildlich dargestellten Lagerung, Behandlung oder Weiterverarbeitung zugeführt werden kann. Ferner wird ein Synthesegasproduktstrom erhalten, der über Leitung 44 aus der Druckwechseladsorptionsanlage ausgeleitet wird und einer nachfolgenden, nicht bildlich dargestellten Lagerung, Behandlung oder Weiterverarbeitung zugeführt werden kann. Aufgrund seines Heizwertes wird er häufig als Brenngasstrom genutzt und beispielweise der Synthesegaserzeugungsanlage zugeführt.

Nachteilig bei dem in Fig. 3 gezeigten Verfahren sind insbesondere die spezifisch hohen Investitionskosten für die Behandlung des Synthesegasprodukt-Stroms, insbesondere für den Parallelbetrieb zweier Sorptionsanlagen und ferner bei Koproduktion einer kleinen Menge des Synthesegasprodukts neben großen Menge an Reinwasserstoff. Es besteht nur eine geringe Flexibilität zur Variation der Produktmengen und es gibt keine direkte Möglichkeit zur Beeinflussung des H₂/CO-Verhältnisses im Synthesegasprodukt. Ferner sind auch die hohe Komplexität der Verfahrenskette und die erheblichen Kosten von Nachteil, die aus Maßnahmen zur Sicherstellung einer hohen Verfügbarkeit des Synthesegasprodukts resultieren.

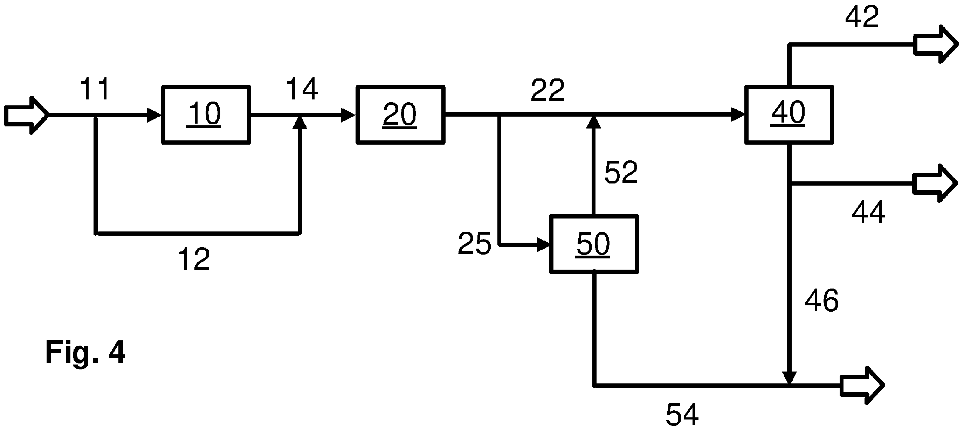

Fig. 4 zeigt nunmehr ein Ausführungsbeispiel eines Verfahrens bzw. einer Anlage gemäß der Erfindung zum Herstellen eines Synthesegasproduktstroms mit einstellbarem H₂/CO-Verhältnis, speziell eines Oxogases, und eines Reinwasserstoffstroms. In dem gezeigten Blockschaltbild wird über Leitung 11 ein Anteil 1 eines Rohsynthesegases, das mittels einer nicht bildlich dargestellten Synthesegaserzeugungsanlage, die beispielsweise als Dampfreformierungsstufe, als Autothermreformierungsstufe, als Partialoxidationsstufe oder als Kombination mindestens zweier der vorgenannten Synthesegaserzeugungsstufen ausgestaltet ist, zu einer mindestens eine CO-Konvertierungsstufe umfassenden CO-Konvertierungsanlage 10 geführt und in diese eingeleitet.

Die Ausgestaltung der Synthesegaserzeugungsanlage sollte sich neben anderen Gesichtspunkten auch nach dem gewünschten Mengenverhältnis des Synthesegasproduktstroms und des Reinwasserstoffstroms sowie an dem angestrebten H₂/CO-Verhältnis des Synthesegasproduktstroms richten. Wenn eine große Menge eines Synthesegasprodukts gefordert ist, das als Oxogas eingesetzt werden soll, empfiehlt sich insbesondere die nichtkatalytische Partialoxidation aufgrund des erzeugten Rohsynthesegases mit hohem CO-Gehalt.

In der CO-Konvertierungsanlage erfolgt das Umsetzen des eingeleiteten Anteils 1 des Rohsynthesegasstroms unter CO-Konvertierungsbedingungen zu einem konvertierten Synthesegasstrom, der nachfolgend über Leitung 14 aus der CO-Konvertierungsanlage ausgeleitet wird. Mittels der als Bypass bzw. Umgang geschalteten Leitung 12 wird der verbliebene Anteil des Rohsynthesegases um die CO-Konvertierungsanlage herumgeführt und direkt in die Leitung 14 eingeleitet.

Der aus konvertiertem Synthesegas und unkonvertiertem Rohsynthesegas erhaltene Mischgasstrom wird über Leitung 14 in eine in eine Sorptionsvorrichtung 20 zur Entfernung saurer Gasbestandteile, insbesondere Kohlendioxid und Schwefelwasserstoff, mittels eines physikalischen oder chemischen Sorptionsverfahrens eingeleitet. Diese kann beispielsweise als Gaswäsche mit tiefkaltem Methanol als Absorbens bzw. Waschmittel nach dem an sich bekannten Rectisol-Verfahren ausgestaltet werden. Über Leitung 22 erfolgt sodann das Ausleiten eines entsäuerten Synthesegasstroms aus der Sorptionsvorrichtung und das Einleiten in eine Druckwechseladsorptionsanlage 40. Zuvor wird jedoch über Leitung 25 ein Anteil 2 des entsäuerten Synthesegasstroms in eine erste Wasserstoffanreicherungsstufe 50 eingeleitet, die eine wasserstoffselektive Membran als Trennorgan enthält. In der ersten Wasserstoffanreicherungsstufe erfolgt das Auftrennen des entsäuerten Synthesegasstroms in einen an Wasserstoff angereicherten Permeatstrom, der über Leitung 52 ausgeleitet und gemeinsam mit dem in Leitung 22 geführten entsäuerten Synthesegasstrom in die Druckwechseladsorptionsanlage eingeleitet wird, und in einen an Wasserstoff abgereicherten Retentatstrom, der als Synthesegasproduktstrom über Leitung 54 aus dem Verfahren ausgeleitet wird und einer nachfolgenden, nicht bildlich dargestellten Lagerung, Behandlung oder Weiterverarbeitung zugeführt werden kann. Insbesondere wird dieser Synthesegasproduktstrom einer nachfolgenden, bildlich nicht dargestellten Anlage zur Oxosynthese zugeführt.

In der Druckwechseladsorptionsanlage erfolgt die Auftrennung des an Wasserstoff angereicherten Synthesegasstroms in einen Reinwasserstoffproduktstrom, der als weiterer Produktstrom über Leitung 42 aus der Druckwechseladsorptionsanlage ausgeleitet und einer nachfolgenden, nicht bildlich dargestellten Lagerung, Behandlung oder Weiterverarbeitung zugeführt werden kann. Ferner wird ein Restgasstrom erhalten, der noch Kohlenmonoxid und ggf. Methan, Argon und weitere Verunreinigungen umfasst. Er wird über Leitung 44 aus der Druckwechseladsorptionsanlage ausgeleitet und kann einer nachfolgenden, nicht bildlich dargestellten Lagerung, Behandlung oder Weiterverarbeitung zugeführt werden. Aufgrund seines Heizwertes wird er häufig als Brenngasstrom genutzt und beispielweise der Synthesegaserzeugungsanlage zugeführt.

Das Einstellen des für den Synthesegasproduktstrom geforderten, molaren H₂/CO-Verhältnis wird dadurch ermöglicht, dass der Anteil 1 und/oder der Anteil 2 entsprechend gewählt wird.

Möglich ist es aber auch, dass ein Anteil 3 des Kohlenmonoxid enthaltenden Restgasstroms in den Synthesegasproduktstrom geführt wird und der Anteil 1 und/oder der Anteil 2 und/oder der Anteil 3 so gewählt wird, dass sich das für den Synthesegasproduktstrom geforderte H₂/CO-Verhältnis ergibt. Auf diese Weise kann die Zusammensetzung des Synthesegasprodukts zielgerichtet und fein dosiert verändert und eingestellt werden, beispielsweise um ein Oxogas mit vordefinierter Zusammensetzung zu erzeugen. Diese Ausgestaltung ist insbesondere dann vorteilhaft, wenn der Restgasstrom nur einen geringen Anteil an Verunreinigungen wie CO₂, Methan oder Argon aufweist. Gegebenenfalls können diese Verunreinigungen mittels einer oder mehrerer, bildlich nicht gezeigter Reinigungsstufen entfernt werden, so dass die Reinheitsspezifikationen für das Oxogas eingehalten werden können.

### Zahlenbeispiele

In der nachfolgenden Tabelle sind für ein erfindungsgemäßes Verfahren bzw. eine entsprechende Anlage gemäß Fig. 4 die Zusammensetzungen einzelner Stoffströme und deren Gesamtstoffmengenströme und Drücke zusammengestellt.

Im vorliegenden Zahlenbeispiel werden aus einem Rohsynthesegasstrom von ca. 14000 kmol/h mit einem H₂-Gehalt von ca. 40 mol-% und einem CO-Gehalt von ca. 52 mol-% folgende Produktströme erzeugt: ein Reinwasserstoffstrom von ca. 9800 kmol/h mit einem H₂-Gehalt von 99,9 mol-%, ein Oxogasstrom von ca. 1000 kmol/h mit einem H₂-Gehalt und einem CO-Gehalt von jeweils ca. 48 mol-%, ein Brenngasstrom von ca. 1900 kmol/h mit einem H₂-Gehalt von ca. 74 mol-% und einem CO-Gehalt von ca. 25 mol-%.

### Bezugszeichenliste

- [10]: CO-Konvertierungsanlage
- [11] - [14]: Leitung
- [20]: Sorptionsvorrichtung
- [20a]: Sorptionsvorrichtung
- [20b]: Sorptionsvorrichtung
- [22] - [23]: Leitung
- [25]: Leitung
- [30]: Anlage zur kryogenen Gaszerlegung
- [32]: Leitung
- [34]: Leitung
- [40]: Druckwechseladsorptionsanlage
- [42]: Leitung
- [44]: Leitung
- [46]: Leitung
- [50]: Membrantrennanlage
- [52]: Leitung
- [54]: Leitung

**Tabelle: Stoffströme und Zusammensetzungen für Ausführungsbeispiel der Erfindung gemäß Fig. 4**

| **Leitung** | **Nr.** | **11** | **14** | **22 + 25** | **25** | **54** | **52** | **22** | **22 + 52** | **44** | **42** |
|---|---|---|---|---|---|---|---|---|---|---|---|
| **von Block** | **Nr.** | **AG** | **10** | **20** | **20** | **50** | **50** | **20** | **20 + 50** | **40** | **40** |
| **zu Block** | **Nr.** | **10** | **20** | **40** | **50** | **AG** | **40** | **40** | **40** | **AG** | **AG** |
| | | | | | | | | | | | |
| **H2** | **mol-%** | 39,9 | 92,7 | 91,8 | 91,8 | 48,2 | 98,5 | 91,8 | 95,6 | 73,7 | 99,9 |
| **CO** | **mol-%** | 51,9 | 5,0 | 7,7 | 7,7 | 48,2 | 1,5 | 7,7 | 4,1 | 25,2 | < 10 ppm |
| **CO₂** | **mol-%** | 5 | 34,6 | < 10 ppm | < 10 ppm | < 10 ppm | < 10 ppm | < 10 ppm | < 10 ppm | < 10 ppm | 0,0 |
| **CH4** | **mol-%** | 0,3 | 0,2 | 0,3 | 0,3 | 1,9 | 0,0 | 0,3 | 0,1 | 0,8 | 0,0 |
| **Rest (N2, Ar)** | **mol-%** | 2,9 | 2,0 | 0,3 | 0,3 | 1,3 | 0,0 | 0,3 | 0,1 | 0,3 | 0,1 |
| | | | | | | | | | | | |
| **Gesamtstrom "trocken"** | **kmol/h** | 14012 | 20284 | 12791 | 7720 | 1023 | 6698 | 5070 | 11765 | 1928 | 9839 |
| **Druck** | **barg** | 54 | 50 | 48 | 48 | 46 | 20 | 48 | 48 | 0,5 | 47 |

| | | | | | | | | | | | |
|---|---|---|---|---|---|---|---|---|---|---|---|
| AG = Anlagengrenze | | | | | | | | | | | |

### Anmerkungen:

Strom in Leitung 42 (Reinwasserstoff): Konzentration CO < 10 ppm gemäß Spezifikation für Reinwasserstoff.

Ströme in Leitungen 22, 25, 44, 52, 54: Konzentration CO2 < 10ppm gemäß Spezifikation für Oxogas.

## Patentansprüche

1. Verfahren zum Herstellen eines Synthesegasproduktstroms mit einstellbarem Wasserstoff-Kohlenmonoxid-Verhältnis (H₂/CO-Verhältnis) und eines Reinwasserstoffstroms aus einem Kohlenwasserstoffe enthaltenden Einsatzstrom, umfassend folgende Schritte:
(a) Bereitstellen des Kohlenwasserstoffe enthaltenden Einsatzstroms,
(b) Zuführen des Kohlenwasserstoffe enthaltenden Einsatzstroms zu einer Synthesegaserzeugungsanlage, umfassend
(b1) eine Dampfreformierungsstufe oder
(b2) eine Autothermreformierungsstufe (ATR) oder
(b3) eine Partialoxidationsstufe (POX) oder
(b4) eine Kombination von mindestens zwei der Stufen (b1) bis (b3), (c) mindestens teilweises Umsetzen des Kohlenwasserstoffe enthaltenden Einsatzstroms in der Synthesegaserzeugungsanlage unter Synthesegaserzeugungsbedingungen zu einem Wasserstoff (H₂) und Kohlenmonoxid (CO) enthaltenden Rohsynthesegasstrom,
(d) Ausleiten eines Rohsynthesegasstroms aus der Synthesegaserzeugungsanlage,
(e) Einleiten mindestens eines Anteils 1 des Rohsynthesegasstroms in eine CO-Konvertierungsanlage, umfassend mindestens eine CO-Konvertierungsstufe, Umsetzen des in die CO-Konvertierungsanlage eingeleiteten Anteils des Rohsynthesegasstroms unter CO-Konvertierungsbedingungen zu einem konvertierten Synthesegasstrom, Ausleiten des konvertierten Synthesegasstroms,
(f) Einleiten des Rohsynthesegasstroms und/oder des konvertierten Synthesegasstroms in eine Sorptionsvorrichtung zur Entfernung saurer Gasbestandteile, insbesondere Kohlendioxid und Schwefelwasserstoff, mittels eines physikalischen oder chemischen Sorptionsverfahrens, Ausleiten eines entsäuerten Synthesegasstroms aus der Sorptionsvorrichtung,
(g) Einleiten mindestens eines Anteils 2 des entsäuerten Synthesegasstroms in eine erste Wasserstoffanreicherungsstufe, enthaltend eine wasserstoffselektive Membran als Trennorgan, Auftrennen des entsäuerten Synthesegasstroms in einen an Wasserstoff angereicherten Permeatstrom und in einen an Wasserstoff abgereicherten Retentatstrom,
(h) Einleiten des an Wasserstoff angereicherten Permeatstroms und des nicht zu der ersten Wasserstoffanreicherungsstufe geführten Anteils des entsäuerten Synthesegasstroms in eine zweite, nach dem Prinzip der Druckwechseladsorption (PSA) arbeitenden Wasserstoffanreicherungsstufe,
(i) Ausleiten eines Reinwasserstoffstroms und eines Kohlenmonoxid enthaltenden Restgasstroms aus der zweiten Wasserstoffanreicherungsstufe,
(j) Ausleiten des an Wasserstoff abgereicherten Retentatstroms aus der ersten Wasserstoffanreicherungsstufe als Synthesegasproduktstrom,
(k) wobei der Anteil 1 und/oder der Anteil 2 so gewählt wird, dass sich das für den Synthesegasproduktstrom geforderte molare H₂/CO-Verhältnis ergibt.

2. Verfahren nach Anspruch 1, **dadurch gekennzeichnet, dass** der Anteil 1 zwischen 0 % und 100 % des Rohsynthesegasstroms beträgt und/oder der Anteil 2 zwischen 0 % und 100 % des entsäuerten Synthesegasstroms beträgt.

3. Verfahren nach Anspruch 1 oder 2, **dadurch gekennzeichnet, dass** ein Anteil 3 des Kohlenmonoxid enthaltenden Restgasstroms in den Synthesegasproduktstrom geführt wird und der Anteil 1 und/oder der Anteil 2 und/oder der Anteil 3 so gewählt wird, dass sich das für den Synthesegasproduktstrom geforderte H₂/CO-Verhältnis ergibt.

4. Verfahren nach Anspruch 3, **dadurch gekennzeichnet, dass** der Anteil 1 zwischen 0 % und 100 % des Rohsynthesegasstroms beträgt und/oder der Anteil 2 zwischen 0 % und 100 % des entsäuerten Synthesegasstroms beträgt und/oder der Anteil 3 zwischen 0 % und 100 % des Kohlenmonoxid enthaltenden Restgasstroms beträgt.

5. Verfahren nach einem der Ansprüche 1 bis 3, **dadurch gekennzeichnet, dass** molare H2/CO-Verhältnis des Synthesegasproduktstroms zwischen 10 und 0,1 mol/mol, bevorzugt zwischen 5 und 0,5 mol/mol, weiter bevorzugt zwischen 2 und 1 mol/mol, meist bevorzugt zwischen 1,25 und 0,75 mol/mol beträgt.

6. Verfahren nach einem der vorigen Ansprüche, **dadurch gekennzeichnet, dass** der Rohsynthesegasstrom abzüglich des Anteils 1 direkt der Sorptionsvorrichtung zugeführt wird.

7. Verfahren nach einem der vorigen Ansprüche, **dadurch gekennzeichnet, dass** der entsäuerte Synthesegasstrom abzüglich des Anteils 2 direkt der zweiten Wasserstoffanreicherungsstufe zugeführt wird.

8. Verfahren nach einem der vorigen Ansprüche, **dadurch gekennzeichnet, dass** der Restgasstrom abzüglich des Anteils 3 als Brenngas aus dem Verfahren ausgeleitet wird.

9. Verfahren nach einem der Ansprüche 3-8, **dadurch gekennzeichnet, dass** der Kohlenmonoxid enthaltende Restgasstrom vor Zuführen zum Synthesegasproduktstrom verdichtet wird.

10. Verfahren nach einem der Ansprüche 3-9, **dadurch gekennzeichnet, dass** der Kohlenmonoxid enthaltende Restgasstrom vor Zuführen zum Synthesegasproduktstrom einer Feinreinigungsstufe zugeführt wird oder nach Zuführen zum Synthesegasproduktstrom einer gemeinsamen Feinreinigungsstufe zugeführt wird.

11. Verfahren nach einem der vorigen Ansprüche, **dadurch gekennzeichnet, dass** der an Wasserstoff angereicherte Permeatstrom vor Zuführen zu der zweiten Wasserstoffanreicherungsstufe verdichtet wird.

12. Anlage zum Herstellen eines Synthesegasproduktstroms mit einstellbarem Wasserstoff-Kohlenmonoxid-Verhältnis (H₂/CO-Verhältnis) und eines Reinwasserstoffstroms aus einem Kohlenwasserstoffe enthaltenden Einsatzstrom, umfassend folgende, miteinander in Fluidverbindung stehende Baugruppen und Bestandteile:
(a) Mittel zum Bereitstellen des Kohlenwasserstoffe enthaltenden Einsatzstroms,
(b) eine Synthesegaserzeugungsanlage, umfassend:
(b1) eine Dampfreformierungsstufe (SMR) oder
(b2) eine Autothermreformierungsstufe (ATR) oder
(b3) eine Partialoxidationsstufe (POX) oder
(b4) eine Kombination von mindestens zwei der Stufen (b1) bis (b3),
Mittel zum Zuführen des Kohlenwasserstoffe enthaltenden Einsatzstroms zu der Synthesegaserzeugungsanlage,
(c) Mittel zum Ausleiten eines Rohsynthesegasstroms, enthaltend Wasserstoff (H₂) und Kohlenmonoxid (CO) aus der Synthesegaserzeugungsanlage,
(d) eine CO-Konvertierungsanlage, umfassend mindestens eine CO-Konvertierungsstufe, Mittel zum Aufteilen des Rohsynthesegasstroms und Mittel Einleiten mindestens eines Anteils 1 des Rohsynthesegasstroms in die CO-Konvertierungsanlage, Mittel zum Ausleiten eines konvertierten Synthesegasstroms,
(e) eine Sorptionsvorrichtung, geeignet zur Entfernung saurer Gasbestandteile, insbesondere Kohlendioxid und Schwefelwasserstoff, mittels eines physikalischen oder chemischen Sorptionsverfahrens, Mittel zum Einleiten des Rohsynthesegasstroms und/oder des konvertierten Synthesegasstroms in die Sorptionsvorrichtung, Mittel zum Ausleiten eines entsäuerten Synthesegasstroms aus der Sorptionsvorrichtung,
(f) eine erste Wasserstoffanreicherungsstufe, enthaltend eine wasserstoffselektive Membran als Trennorgan, geeignet zum Auftrennen des entsäuerten Synthesegasstroms in einen an Wasserstoff angereicherten Permeatstrom und in einen an Wasserstoff abgereicherten Retentatstrom, Mittel zum Aufteilen des entsäuerten Synthesegasstroms und Mittel zum Einleiten mindestens eines Anteils 2 des entsäuerten Synthesegasstroms in die erste Wasserstoffanreicherungsstufe, Mittel zum Ausleiten des an Wasserstoff angereicherten Permeatstroms und des an Wasserstoff abgereicherten Retentatstroms,
(g) eine zweite, nach dem Prinzip der Druckwechseladsorption (PSA) arbeitende Wasserstoffanreicherungsstufe, Mittel zum Einleiten des an Wasserstoff angereicherten Permeatstroms und des nicht zu der ersten Wasserstoffanreicherungsstufe geführten Anteils des entsäuerten Synthesegasstroms in die zweite Wasserstoffanreicherungsstufe,
(h) Mittel zum Ausleiten eines Reinwasserstoffstroms und eines Kohlenmonoxid enthaltenden Restgasstroms aus der zweiten Wasserstoffanreicherungsstufe,
(i) Mittel zum Ausleiten des an Wasserstoff abgereicherten Retentatstroms aus der ersten Wasserstoffanreicherungsstufe als Synthesegasproduktstrom.

13. Anlage nach Anspruch 12, **dadurch gekennzeichnet, dass** die Mittel zum Aufteilen des Rohsynthesegasstroms und die Mittel zum Aufteilen des entsäuerten Synthesegasstroms so beschaffen sind, dass der Anteil 1 und/oder der Anteil 2 so gewählt werden kann, dass sich das für den Synthesegasproduktstrom geforderte molare H₂/CO-Verhältnis ergibt.

14. Anlage nach Anspruch 12 oder 13, **dadurch gekennzeichnet, dass** ferner Mittel zum Aufteilen des Kohlenmonoxid enthaltenden Restgasstroms und Mittel zum Einleiten eines Anteils 3 des Kohlenmonoxid enthaltenden Restgasstroms in den Synthesegasproduktstrom umfasst werden, wobei die Mittel so beschaffen sind, dass der Anteil 1 und/oder der Anteil 2 und/oder der Anteil 3 so gewählt werden kann, dass sich das für den Synthesegasproduktstrom geforderte H₂/CO-Verhältnis ergibt.

15. Anlage nach Anspruch 14, **dadurch gekennzeichnet, dass** ferner Mittel umfasst werden, die es gestatten, dass der Kohlenmonoxid enthaltende Restgasstrom vor Zuführen zum Synthesegasproduktstrom verdichtet werden kann.

16. Anlage nach einem der Ansprüche 14 und 15, **dadurch gekennzeichnet, dass** ferner Mittel umfasst werden, die es gestatten, dass der Kohlenmonoxid enthaltende Restgasstrom vor Zuführen zum Synthesegasproduktstrom einer Feinreinigung unterzogen wird oder nach Zuführen zum Synthesegasproduktstrom einer gemeinsamen Feinreinigung unterzogen wird.

17. Verwendung eines Verfahrens gemäß eines der Ansprüche 1 bis 10 oder einer Anlage gemäß der Ansprüche 12 bis 16 zum Herstellen eines als Oxogas geeigneten Synthesegasproduktstroms.

## Claims

1. Process for producing a synthesis gas product stream having an adjustable hydrogen-carbon monoxide ratio (H₂/CO ratio) and a pure hydrogen stream from an input stream containing hydrocarbons, comprising the steps of:
(a) providing the input stream containing hydrocarbons,
(b) supplying the input stream containing hydrocarbons to a synthesis gas production plant comprising
(b1) a steam reforming stage or
(b2) an autothermal reforming stage (ATR) or
(b3) a partial oxidation stage (POX) or
(b4) a combination of at least two of the stages (b1) to (b3),
(c) at least partial conversion of the input stream containing hydrocarbons in the synthesis gas production plant under synthesis gas production conditions to afford a raw synthesis gas stream containing hydrogen (H₂) and carbon monoxide (CO),
(d) discharging a raw synthesis gas stream from the synthesis gas production plant,
(e) introducing at least a proportion 1 of the raw synthesis gas stream into a CO conversion plant comprising at least one CO conversion stage, converting the proportion of the raw synthesis gas stream introduced into the CO conversion plant under CO conversion conditions to afford a converted synthesis gas stream, discharging the converted synthesis gas stream,
(f) introducing the raw synthesis gas stream and/or the converted synthesis gas stream into a sorption apparatus for removal of acidic gas constituents, especially carbon dioxide and hydrogen sulfide, using a physical or chemical sorption process, discharging a deacidified synthesis gas stream from the sorption apparatus,
(g) introducing at least a proportion 2 of the deacidified synthesis gas stream into a first hydrogen enrichment stage containing a hydrogen selective membrane as the separating means, separating the deacidified synthesis gas stream into a hydrogen-enriched permeate stream and into a hydrogen-depleted retentate stream,
(h) introducing the hydrogen-enriched permeate stream and the proportion of the deacidified synthesis gas stream not passed to the first hydrogen enrichment stage into a second hydrogen enrichment stage operating according to the principle of pressure swing adsorption (PSA),
(i) discharging a pure hydrogen stream and a carbon monoxide-containing residual gas stream from the second hydrogen enrichment stage,
(j) discharging the hydrogen-depleted retentate stream from the first hydrogen enrichment stage as a synthesis gas product stream,
(k) wherein the proportion 1 and/or the proportion 2 are chosen such that the molar H₂/CO ratio required for the synthesis gas product stream is obtained.

2. Process according to Claim 1, **characterized in that** the proportion 1 is between 0% and 100% of the raw synthesis gas stream and/or the proportion 2 is between 0% and 100% of the deacidified synthesis gas stream.

3. Process according to Claim 1 or 2, **characterized in that** a proportion 3 of the carbon monoxide-containing residual gas stream is passed into the synthesis gas product stream and the proportion 1 and/or the proportion 2 and/or the proportion 3 are chosen such that the H₂/CO ratio required for the synthesis gas product stream is obtained.

4. Process according to Claim 3, **characterized in that** the proportion 1 is between 0% and 100% of the raw synthesis gas stream and/or the proportion 2 is between 0% and 100% of the deacidified synthesis gas stream and/or the proportion 3 is between 0% and 100% of the carbon monoxide-containing residual gas stream.

5. Process according to any of Claims 1 to 3, **characterized in that** the molar H₂/CO ratio of the synthesis gas product stream is between 10 and 0.1 mol/mol, preferably between 5 and 0.5 mol/mol, more preferably between 2 and 1 mol/mol, most preferably between 1.25 and 0.75 mol/mol.

6. Process according to any of the preceding claims, **characterized in that** the raw synthesis gas stream less proportion 1 is directly supplied to the sorption apparatus.

7. Process according to any of the preceding claims, **characterized in that** the deacidified synthesis gas stream less proportion 2 is directly supplied to the second hydrogen enrichment stage.

8. Process according to any of the preceding claims, **characterized in that** the residual gas stream less proportion 3 is discharged from the process as fuel gas.

9. Process according to any of Claims 3-8, **characterized in that** the carbon monoxide-containing residual gas stream is compressed before supplying to the synthesis gas product stream.

10. Process according to any of Claims 3-9, **characterized in that** the carbon monoxide-containing residual gas stream is supplied to a fine purification stage before supplying to the synthesis gas product stream or is supplied to a joint fine purification stage after supplying to the synthesis gas product stream.

11. Process according to any of the preceding claims, **characterized in that** the hydrogen-enriched permeate stream is compressed before supplying to the second hydrogen enrichment stage.

12. Plant for producing a synthesis gas product stream having an adjustable hydrogen-carbon monoxide ratio (H₂/CO ratio) and a pure hydrogen stream from an input stream containing hydrocarbons, comprising the following assemblies and constituents in fluid connection with one another:
(a) means for providing the input stream containing hydrocarbons,
(b) a synthesis gas production plant, comprising:
(b1) a steam reforming stage (SMR) or
(b2) an autothermal reforming stage (ATR) or
(b3) a partial oxidation stage (POX) or
(b4) a combination of at least two of the stages (b1) to (b3),
means for supplying the input stream containing hydrocarbons to, the synthesis gas production plant,
(c) means for discharging a raw synthesis gas stream containing hydrogen (H₂) and carbon monoxide (CO) from the synthesis gas production plant,
(d) a CO conversion plant comprising at least one CO conversion stage, means for dividing the raw synthesis gas stream and means for introducing at least one proportion 1 of the raw synthesis gas stream into the CO conversion plant, means for discharging a converted synthesis gas stream,
(e) a sorption apparatus suitable for removal of acidic gas constituents, especially carbon monoxide and hydrogen sulfide, using a physical or chemical sorption process, means for introducing the raw synthesis gas stream and/or the converted synthesis gas stream into the sorption apparatus, means for discharging a deacidified synthesis gas stream from the sorption apparatus,
(f) a first hydrogen enrichment stage containing a hydrogen-selective membrane as the separating means suitable for separating the deacidified synthesis gas stream into a hydrogen-enriched permeate stream and into a hydrogen-depleted retentate stream, means for dividing the deacidified synthesis gas stream and means for introducing at least a proportion 2 of the deacidified synthesis gas stream into the first hydrogen enrichment stage, means for discharging the hydrogen-enriched permeate stream and the hydrogen-depleted retentate stream,
(g) a second hydrogen enrichment stage operating according to the principle of pressure swing adsorption (PSA), means for introducing the hydrogen-enriched permeate stream and the proportion of the deacidified synthesis gas stream not passed to the first hydrogen enrichment stage into the second hydrogen enrichment stage,
(h) means for discharging a pure hydrogen stream and a carbon monoxide-containing residual gas stream from the second hydrogen enrichment stage,
(i) means for discharging the hydrogen-depleted retentate stream from the first hydrogen enrichment stage as a synthesis gas product stream.

13. Plant according to Claim 12, **characterized in that** the means for dividing the raw synthesis gas stream and the means for dividing the acidified synthesis gas stream are constituted such that the proportion 1 and/or the proportion 2 can be chosen such that the molar H₂/CO ratio required for the synthesis gas product stream is obtained.

14. Plant according to Claim 12 or 13, **characterized in that** it further comprises means for dividing the carbon monoxide-containing residual gas stream and means for introducing a proportion 3 of the carbon monoxide-containing residual gas stream into the synthesis gas product stream, wherein the means are constituted such that the proportion 1 and/or the proportion 2 and/or the proportion 3 can be chosen such that the H₂/CO ratio required for the synthesis gas product stream is obtained.

15. Plant according to Claim 14, **characterized in that** it further comprises means which allow the carbon monoxide-containing residual gas stream to be compressed before supplying to the synthesis gas product stream.

16. Plant according to either of Claims 14 and 15, **characterized in that** it further comprises means which allow the carbon monoxide-containing residual gas stream to be subjected to a fine purification before supplying to the synthesis gas product stream or subjected to a joint fine purification after supplying to the synthesis gas product stream.

17. Use of a process according to any of Claims 1 to 10 or a plant according to Claims 12 to 16 to produce a synthesis gas product stream suitable as oxo gas.

## Revendications

1. Procédé de fabrication d'un courant de gaz de synthèse produit présentant un rapport hydrogène-monoxyde de carbone (rapport H₂/CO) réglable et d'un courant d'hydrogène pur à partir d'un courant de charge contenant des hydrocarbures, comprenant les étapes suivantes :
(a) fourniture d'un courant de charge contenant des hydrocarbures,
(b) amenée du courant de charge contenant des hydrocarbures à une installation de production de gaz de synthèse, comprenant
(b1) un étage de vaporeformage ou
(b2) un étage de reformage autotherme (ATR) ou
(b3) un étage d'oxydation partielle (POX) ou
(b4) une combinaison d'au moins deux des étages (b1) à (b3),
(c) réaction au moins partielle du courant de charge contenant des hydrocarbures dans l'unité de production de gaz de synthèse dans les conditions de production de gaz de synthèse pour obtenir un courant de gaz de synthèse brut contenant de l'hydrogène (H₂) et du monoxyde de carbone (CO),
(d) évacuation d'un courant de gaz de synthèse brut à partir de l'installation de production de gaz de synthèse,
(e) introduction d'au moins une proportion 1 du courant de gaz de synthèse brut dans une installation de conversion de CO, comprenant au moins un étage de conversion de CO, réaction de la proportion du courant de gaz de synthèse brut introduite dans l'installation de conversion de CO, dans les conditions de conversion de CO, pour obtenir un courant de gaz de synthèse converti, évacuation du courant de gaz de synthèse converti,
(f) introduction du courant de gaz de synthèse brut et/ou du courant de gaz de synthèse converti dans un dispositif de sorption pour éliminer les constituants gazeux acides, en particulier le dioxyde de carbone et l'hydrogène sulfuré, par un procédé de sorption physique ou chimique, évacuation du courant de gaz de synthèse désacidifié à partir du dispositif de sorption,
(g) introduction d'au moins une proportion 2 du courant de gaz de synthèse désacidifié dans une première installation d'enrichissement en hydrogène, contenant une membrane sélective d'hydrogène servant d'organe séparateur, séparation du courant de gaz de synthèse désacidifié en un courant de perméat enrichi en hydrogène et en un courant de rétentat appauvri en hydrogène,
(h) introduction du courant de perméat enrichi en hydrogène et de la proportion du courant de gaz de synthèse désacidifié envoyée au premier étage d'enrichissement en hydrogène, dans un second étage d'enrichissement de l'hydrogène, fonctionnant selon le principe de l'adsorption à modulation de pression (PSA),
(i) évacuation d'un courant d'hydrogène pur et d'un courant de gaz résiduel contenant du monoxyde de carbone à partir du second étage d'enrichissement en hydrogène,
(j) évacuation du courant de rétentat appauvri en hydrogène à partir du premier étage d'enrichissement en hydrogène, en tant que courant de gaz de synthèse produit,
(k) la proportion 1 et/ou la proportion 2 étant choisies de façon à obtenir le rapport molaire H₂/CO exigé pour le courant de gaz de synthèse produit.

2. Procédé selon la revendication 1, **caractérisé en ce que** la proportion 1 est comprise entre 0 % et 100 % du courant de gaz de synthèse brut et/ou que la proportion 2 est comprise entre 0 % et 100 % du courant de gaz de synthèse désacidifié.

3. Procédé selon la revendication 1 ou 2, **caractérisé en ce qu'**une proportion 3 du courant de gaz résiduel contenant du monoxyde de carbone est envoyée dans le courant de gaz de synthèse produit, et la proportion 1 et/ou la proportion 2 et/ou la proportion 3 sont choisies de teille sorte que l'on obtienne le rapport H₂/CO exigé pour le courant de gaz de synthèse produit.

4. Procédé selon la revendication 3, **caractérisé en ce que** la proportion 1 est comprise entre 0 % et 100 % du courant de gaz de synthèse brut, et/ou que la proportion 2 est comprise entre 0 % et 100 % du courant de gaz de synthèse désacidifié et/ou que la proportion 3 est comprise entre 0 % et 100 % du courant de gaz résiduel contenant du monoxyde de carbone.

5. Procédé selon l'une des revendications 1 à 3, **caractérisé en ce que** le rapport molaire H₂/CO du courant de gaz de synthèse produit est compris entre 10 et 0,1 mol/mol, en particulier entre 5 et 0,5 mol/mol, plus préférentiellement entre 2 et 1 mol/mol, tout spécialement entre 1,25 et 0,75 mol/mol.

6. Procédé selon l'une des revendications précédentes, **caractérisé en ce qu'**on amène directement dans le dispositif de sorption le courant de gaz de synthèse brut après déduction de la proportion 1.

7. Procédé ' selon l'une des revendications précédentes, **caractérisé en ce que** le courant de gaz de synthèse désacidifié est envoyé directement au second étage d'enrichissement en hydrogène après déduction de la proportion 2.

8. Procédé selon l'une des revendications précédentes, **caractérisé en ce que** le courant de gaz résiduel, après déduction de la proportion 3, est évacué du procédé sous forme de gaz combustible.

9. Procédé selon l'une des revendications 3 à 8, **caractérisé en ce que** le courant de gaz résiduel contenant du monoxyde de carbone est comprimé avant amenée au courant de gaz de synthèse produit.

10. Procédé selon l'une des revendications 3 à 9, **caractérisé en ce que** le courant de gaz résiduel contenant du monoxyde de carbone est, avant amenée au courant de gaz de synthèse produit, envoyé à un étage de purification fine, ou, après amenée au courant de gaz de synthèse produit, est envoyé à un étage de purification fine commun.

11. Procédé selon l'une des revendications précédentes, **caractérisé en ce que** le courant de perméat enrichi en hydrogène est comprimé avant amenée au second étage d'enrichissement en hydrogène.

12. Installation de fabrication d'un courant de gaz de synthèse produit présentant un rapport hydrogène-monoxyde de carbone (rapport H₂/CO) réglable et d'un courant d'hydrogène pur à partir d'un courant de charge contenant des hydrocarbures, comprenant les composants et constituants suivants, en liaison fluidique les uns avec les autres: :
(a) des moyens de mise en œuvre du courant de charge contenant des hydrocarbures,
(b) une installation de production de gaz de synthèse, comprenant :
(b1) un étage de vaporeformage (SMR) ou
(b2) un étage de reformage autotherme (ATR) ou
(b3) un étage d'oxydation partielle(POX) ou
(b4) une combinaison d'au moins deux des étages (b1) à (b3),
des moyens pour amener le courant de charge contenant des hydrocarbures à l'installation de production de gaz de synthèse,
(c) des moyens pour évacuer un courant de gaz de synthèse, contenant de l'hydrogène (H₂) et du monoxyde de carbone (CO), à partir de l'installation de production de gaz de synthèse,
(d) une installation de conversion de CO, comprenant au moins un étage de conversion de CO,
des moyens pour évacuer le courant de gaz de synthèse et des moyens pour introduire au moins une proportion 1 du courant de gaz de synthèse brut dans l'installation de conversion de CO, des moyens pour évacuer un courant de gaz de synthèse converti
(e) un dispositif de sorption, permettant l'élimination des constituants gazeux acides, en particulier le dioxyde de carbone et l'hydrogène sulfuré, à l'aide d'un procédé de sorption physique ou chimique, des moyens pour introduire le courant de gaz de synthèse brut et/ou le courant de gaz de synthèse converti dans le dispositif de sorption, des moyens pour évacuer un courant de gaz de synthèse acidifié à partir du dispositif de sorption,
(f) un premier étage d'enrichissement en hydrogène, contenant une membrane sélective d'hydrogène en tant qu'organe séparateur, convenant à la séparation du courant de gaz de synthèse désacidifié en un courant de perméat enrichi en hydrogène et en un courant de rétentat appauvri en hydrogène, des moyens pour diviser le courant de gaz de synthèse désacidifié et des moyens pour introduire au moins une proportion 2 du courant de gaz de synthèse désacidifié dans le premier étage d'enrichissement en hydrogène, des moyens pour évacuer le courant de perméat enrichi en hydrogène et le courant de rétentat appauvri en hydrogène,
(g) un second étage d'enrichissement en hydrogène, fonctionnant selon le principe de l'adsorption à modulation de pression (PSA), des moyens pour introduire le courant de perméat enrichi en hydrogène et la proportion du courant de gaz de synthèse désacidifié envoyée au premier étage d'enrichissement en hydrogène, dans le second étage d'enrichissement en hydrogène,
(h) des moyens pour évacuer un courant d'hydrogène pur et un courant de gaz résiduel contenant du monoxyde de carbone à partir du second étage d'enrichissement en hydrogène,
(i) des moyens pour évacuer le courant de rétentat appauvri en hydrogène à partir du premier étage d'enrichissement en hydrogène, servant de courant de gaz de synthèse produit.

13. Installation selon la revendication 12, **caractérisée en ce que** les moyens pour évacuer le courant de gaz de synthèse brut et les moyens pour diviser le courant de gaz de synthèse désacidifié sont conçus de telle sorte que la proportion 1 et/ou la proportion 2 puissent être choisies de façon à obtenir le rapport molaire H₂/CO nécessaire au courant de gaz de synthèse produit.

14. Installation selon la revendication 12 ou 13, **caractérisée en ce qu'**il est en outre prévu des moyens pour diviser le courant de gaz résiduel contenant du monoxyde de carbone et des moyens pour introduire la proportion 3 du courant de gaz résiduel contenant du monoxyde de carbone dans le courant de gaz de synthèse produit, les moyens étant conçus de telle sorte que la proportion 1 et/ou la proportion 2 et/ou la proportion 3 soient choisies de façon à obtenir le rapport H₂/CO exigé pour le courant de gaz de synthèse produit.

15. Installation selon la revendication 14, **caractérisée en ce qu'**il est en outre prévu des moyens qui permettent de pouvoir comprimer le courant de gaz résiduel contenant du monoxyde de carbone avant amenée au courant de gaz de synthèse produit.

16. Installation selon l'une des revendications 14 et 15, **caractérisée en ce qu'**il est prévu en outre des moyens qui permettent de soumettre le courant de gaz résiduel contenant du monoxyde de carbone à une purification fine avant amenée au courant de gaz de synthèse produit, ou à le soumettre à une purification fine commune avant amenée au courant de gaz de synthèse produit.

17. Utilisation d'un procédé selon l'une des revendications 1 à 10 ou d'une installation selon les revendications 12 à 16 pour fabriquer un courant de gaz de synthèse produit convenant en tant que gaz oxo.
